Europäisches Patentamt

European Patent Office

Office européen des brevets

Veröffentlichungsnummer: **0 272 516**
**A2**

# EUROPÄISCHE PATENTANMELDUNG

Anmeldenummer: **87117970.1**

Int. Cl.4: **H01B 7/12**

Anmeldetag: **04.12.87**

Priorität: **16.12.86 DE 8633630 U**

Veröffentlichungstag der Anmeldung:
**29.06.88 Patentblatt 88/26**

Benannte Vertragsstaaten:
**DE GB NL**

Anmelder: **Dietz, Volker**
**Mozartring 16**
**D-8011 Baldham(DE)**

Erfinder: **Dietz, Volker**
**Mozartring 16**
**D-8011 Baldham(DE)**

Vertreter: **Neidl-Stippler, Cornelia, Dr.**
**Rauchstrasse 2**
**D-8000 München 80(DE)**

Flexibles Kabel mit niedrigem spezifischen Gewicht.

Die Erfindung betrifft ein flexibles Kabel mit niedrigem spezifischem Gewicht, insbesondere Schwimmkabel, mit einem oder mehreren, ggf. miteinander verseilten Leiter(n) 10 und einem diese(n) zumindest teilweise umgebenden Isolierungsmantel 16, wobei der Isolierungsmantel 16 ein Gaseinschlüsse, wie Luft od. dgl. aufweisendes, flexibles, druckbeständiges Isoliermaterial beinhaltet.

Fig. 1

EP 0 272 516 A2

## Flexibles Kabel mit niedrigem spezifischen Gewicht

Die Erfindung betrifft ein flexibles Kabel mit niedrigem spezifischen Gewicht, insbesondere Schwimmkabel, mit einem oder mehreren, ggf. miteinander verseilten Leiter(n) und einem diese(n) zumindest teilweise umgebenden Isolierungsmantel.

Für die Steuerung/Signalübertragung und/oder Energieversorgung von Unterwasserverbrauchern und - anschlußkomponenten, wie sie bspw. für die Bergung von Schiffen oder für Arbeiten an Bohrplattformen aber auch für die Rohstoffgewinnung von Meeresgrund (Manganknollen od. ähnl.) oder die Unterwasserarchäologie eingesetzt werden als auch für die Signalübertagung von automatischen Unterwasserbeobachtungsgeräten od. dgl. ist es erwünscht, leichte Kabel zu haben, um ein Absinken des Kabels und damit den Energieaufwand, das Kabel im Wasser oder einer anderen Flüssigkeit zu befördern und zu tragen, zu vermeiden. Bisher war es bereits aufgrund des Kabelgewichtes schwierig, längere Kabel für Unter-Wasser-Arbeiten einzusetzen und daher bspw. das Arbeiten in größeren Tiefen erschwert.

Ein weiterer Nachteil von Kabeln, die in Wasser sinken, besteht darin, daß sie sich am Grunde von Gewässern leicht verhaken und häufig nur mit großen Schwierigkeiten wieder geborgen werden können.

Es wurde bereits vorgeschlagen, zur Erniedrigung des spezifischen Gewichts derartiger Kabel einen Innenmantel aus geschäumtem Isoliermaterial einzusetzen. Das geschäumte Material ist nicht ausreichend druckresistent und läßt bei Einsatz in größeren Tiefen irreversibel an Auftrieb nach. Falls hinreichend starke Schutzmäntel/-rohre vorgesehen wurden, um einen geschäumten Innenmantel vor Druck zu schützen, wirkte sich dieser ungünstig auf das spezifische Gewicht und die Flexibilität des Kabels aus.

Es ist demzufolge Aufgabe der Erfindung, ein druckresistentes haltbareres Kabel mit niedrigem spezifischem Gewicht zu schaffen.

Die Aufgabe wird erfindungsgemäß dadurch gelöst, daß der Leiterisolierungsmantel ein Gaseinschlüßsse, wie Luft od. dgl. aufweisendes, flexibles, druckbeständiges Isoliermaterial aufweist.

Dabei können der/die Leiter elektrische Leiter, und/oder Lichtwellenleiter ist/sein, je nach Einsatzzweck. Falls Lichtwellenleiter alleine oder gemeinsam mit elektrischen Leitern eingesetzt werden, kann es sinnvoll sein, sie in Schutzrohre einzuschließen, um sie vor einer übermäßigen Biege- und Druckbeanspuchung zu schützen.

Die Leiter können miteinander verseilt sein.

Es ist vorteilhaft, wenn im Raum zwischen Leiter(n) und Kabelaußenmantel Zugentlastungsfasern, bspw. Glasfasern, hochfesten Kunststoffasern, wie Polyaramid, Keramikfasern oder Gemischen derselben, etc., angeordnet sind. Der/die Leiter können in üblicher Weise von einem Innenisolierungsmantel umgeben ist/sein. Dabei kann auch der Innenisolierungsmantel ein Gaseinschlüsse, wie Luft, aufweisendes flexibles Isoliermaterial sein.

Das Gaseinschlüsse aufweisende, druckbeständige Leichtmaterial kann ein verzelltes oder auch radial vernetztes Isoliermaterial sein. Unter "verzellt" werden hier vollständig geschlossene Zellen in eimem Isoliermaterial verstanden, die durch im wstl. gleichmäßig starke Wände umschlossen sind. Derartige verzellte Materialien zeichnen sich durch eine - bspw. gegenüber geschäumten Materialien -verbesserte Druckbeständigkeit aus. Es eignen sich für diese Zwecke Polymere wie Teflon, Polyethylen, Polypropylen, Polyurethan od. dgl..

Anstelle eines verzellten flexiblen Polymermaterials kann aber auch ein weniger flexible oder unflexible gashaltige Körper, wie Kunststoffkörper, z.B. Styroporkügelchen, umschließendes flexibles Polymermaterial eingesetzt werden.

Das Kabel kann in üblicher Weise einen Außenmantel aus flexiblem, mechanisch und/oder chemisch widerstandsfähigem Isoliermaterial, wie Polyurethan oder Gummi oder auch einem feuerwidrigen Material aufweisen.

Durch, daß erstmals druckresistente flexible Kabel mit sehr niedrigem spezifischem Geicht geschaffen wurden, ist es erstmals möglich, derartige Kabel auch in größeren Tiefen, mit größeren Reichweiten und besserer Flexibilität, als bisher möglich, einzusetzen.

Die Erfindung soll nun im folgenden anhand der Zeichnung, die bevorzugte Ausgestaltungen des erfindungsgemäßen Kabels zeigt, naäher erläutert werden. Dabei zeigt:

Fig. 1 : einen Querschnitt durch ein erfindungsgemäßes Kabel

Fig. 2 : einen Querschnitt durch eine weitere Ausführungsform der erfindungsgemäßen Kabel mit meh--reren Leitern; und

Fig. 3 : einen Querschnitt durch ein weiteres erfindungsgemäßes Kabel mit einem verzellten Innenmantel.

Fig. 4 : einen Querschnitt durch eine weitere bevorzugte Ausführungsform eines erfindungsgemäßen Kabels

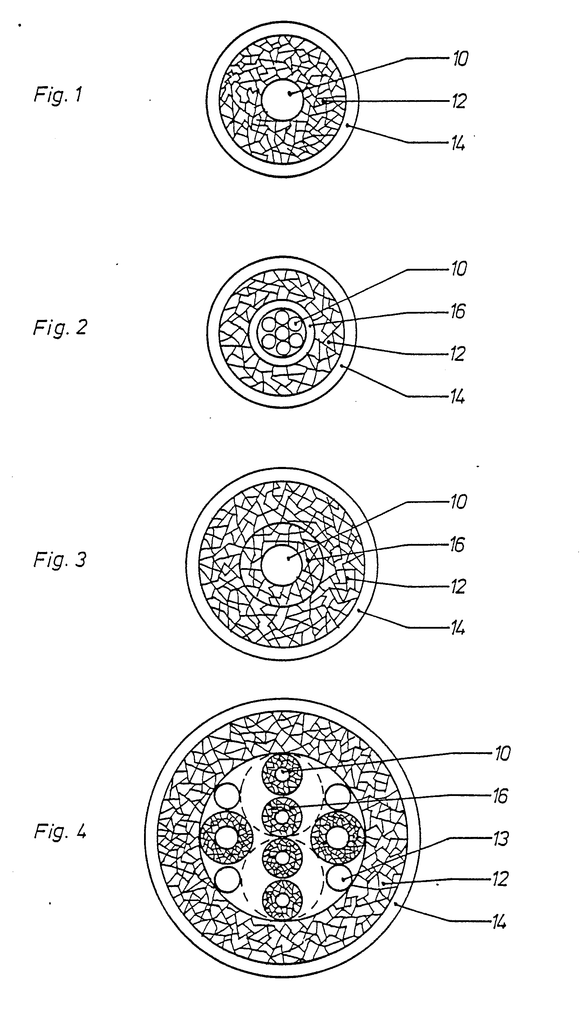

Wie in Fig. 1 gezeigt, weist ein erfindungsgemäßes schwimmfähiges Kabel einen Leiter 10 auf, der von einem verzellten isolierenden Polymer-Isolierungsmantel 12 umgeben ist. Der verzellte Polymer-Isolierungsmantel 12 ist durch einen Außenmantel 14 aus einem mechanisch widerstandsfähigen flexiblen Polymeren abgeschlossen.

In Fig. 2 ist eine weitere bevorzugte Ausführungsform eines erfindungsgemäßen Kabels im Querschnitt schematisch gezeigt, bei der mehrere Lichtwellenleiter 10 miteinander verseilt sind und diese Leiteranordnung durch einen Innenisolierungsmantel 16 umschlossen wird. Auf dem Innenisolierungsmantel 16 ist ein verzellter Polymer-Isolierungsmantel 12 aufgebracht, der weiderum gegen die Umgebung durch einen Außenmantel 14 abgeschlossen ist.

In Fig. 3 ist eine weitere Ausgestaltung des erfindungsgemäßen Kabels im Querschnitt dargestellt, bei dem ein Leiter 10 durch einen aus verzelltem flexiblem Polymerma terial bestehenden Innenisolierungsmantel 16 umgeben ist, auf dem sich ein verzellter Polymer-Isolierungsmantel 12 aus einem anderen Material befindet. Diese Ausführungsform kann dann sinnvoll sein, wenn das Material des Isolierungsmantels nicht hinreichend gut isoliert oder ein preiswerteres Material für den Isolierungsmantel 12 erwünscht ist.

In Fig. 4 ist eine weitere bevorzugte Ausführungsform eines erfindungsgemäßen Schwimmkabels dargestellt, bei der die Leiter 10 einzeln durch geschäumte Leiterinnenisolierungen 16 umschlossen, miteinander verseilt sind. Zwischen den Leiterbündeln laufen Zugentlastungselemente 13. Die mit dem Innenisolierungsmantel 16 umschlossenen Leiter 10 und Zugentlastungselemente 13 werden von einem geschäumten Isolierungsmantel 12 umgeben, der nach außen durch einen Außenmantel 14 abgeschlossen ist.

### Ansprüche

1. Flexibles Kabel mit niedrigem spezifischen Gewicht, insbesondere Schwimmkabel, mit einem oder mehreren, ggf. miteinander verseilten Leiter-(n) und einem diese(n) zumindest teilweise umgebenden Isolierungsmantel, dadurch **gekennzeichnet,** daß der Isolierungsmantel (12) ein Gaseinschlüsse, wie Luft od. dgl. aufweisendes, flexibles, druckbeständiges Isoliermaterial beinhaltet.

2. Kabel nach Anspruch 1, dadurch **gekennzeichnet,** daß der/ die Leiter (10) elektrische Leiter, und/oder Lichtwellenleiter ist/sind.

3. Kabel nach Anspruch 2, dadurch **gekennzeichnet,** daß die Leiter (10) miteinander verseilt sind.

4. Kabel nach Anspruch 3, dadurch **gekennzeichnet,** daß im Raum zwischen Leiter(n) (10) und Kabelaußenmantel (14) Zugentlastungsfasern, bspw. Glasfasern, hochfesten Kunststoffasern, wie Polyaramid; Keramikfasern oder Gemische derselben, angeordnet sind.

5. Kabel nach einem der vorangehenden Ansprüche, dadurch **gekennzeichnet,** daß der/die Leiter (10) von einem Innenisolierungsmantel (16) umgeben ist/sind.

6. Kabel nach einem der vorangehenden Ansprüche, dadurch **gekennzeichnet,** daß der Innenisolierungsmantel (16) ein Gaseinschlüsse, wie Luft od. dgl. aufweisendes flexibles Isoliermaterial ist.

7. Kabel nach einem vorangehenden Ansprüche, dadurch **gekennzeichnet,** daß das Gaseinschlüsse aufweisende flexible Leichtmaterial ein verzelltes oder auch radial vernetztes Isoliermaterial ist.

8. Kabel nach Anspruch 7, dadurch **gekennzeichnet,** daß das Isoliermaterial Teflon, Polyethylen, Polypropylen oder Polyurethan ist.

9. Kabel nach einem der Ansprüche 1 bis 6, dadurch **gekennzeichnet,** daß das Gaseinschlüsse, wie Luft od. dgl. aufweisende flexible Leichtmaterial ein wenig flexible oder inflexible, gashaltige Körper, bspw. Kunststoffkörper, wie Styropor, umschließendes flexibles Isoliermaterial ist.

10. Kabel nach einem der vorangehenden Ansprüche, ferner **gekennzeichnet** durch einen Außenmantel aus flexiblem, mechanisch und/oder chemisch widerstandsfähigem Isoliermaterial, wie Polyurethan oder Gummi oder einem feuerwidrigen Material.

Fig. 1

Fig. 2

Fig. 3

Fig. 4